# EUROPÄISCHE PATENTSCHRIFT

(11) **EP 3 188 931 B1**
(45) Veröffentlichungstag und Bekanntmachung des Hinweises auf die Patenterteilung: **29.08.2018**
(21) Anmeldenummer: 15760092.5
(22) Anmeldetag: 01.09.2015
(51) Int. Cl.: B60Q 1/00, B60K 37/06, B60K 35/00

(54) **BELEUCHTUNGSSYSTEM FÜR EINEN KRAFTWAGEN UND KRAFTWAGEN MIT EINEM BELEUCHTUNGSSYSTEM**
LIGHTING SYSTEM FOR A MOTOR VEHICLE AND MOTOR VEHICLE HAVING A LIGHTING SYSTEM
SYSTÈME D'ÉCLAIRAGE POUR VÉHICULE AUTOMOBILE ET VÉHICULE AUTOMOBILE ÉQUIPÉ D'UN SYSTÈME D'ÉCLAIRAGE

(30) Priorität: 05.09.2014 DE 102014013185
(43) Veröffentlichungstag der Anmeldung: 12.07.2017
(73) Patentinhaber: Audi AG, 85045 Ingolstadt (DE); Volkswagen AG, 38440 Wolfsburg (DE)
(72) Erfinder: SEITZ, Günther, 85092 Kösching (DE); BOEHME, Arndt, 38518 Gifhorn (DE); MARZ, Charlotte, 85757 Karlsfeld (DE); LOHMUELLER, Katrin, 80997 München (DE)
(86) Internationale Anmeldenummer: PCT/EP2015/001764
(87) Internationale Veröffentlichungsnummer: WO 2016/034282

(56) Entgegenhaltungen:
- WO-A1-2010/076589
- WO-A1-2014/030028
- WO-A2-2009/040663
- DE-A1-102012 015 062

## Beschreibung

Die Erfindung betrifft ein Beleuchtungssystem für einen Kraftwagen und einen Kraftwagen mit einem Beleuchtungssystem der in den Oberbegriffen der unabhängigen Patentansprüche angegebenen Art.

Es ist aus Sicherheitsgründen wünschenswert, dass eine Beleuchtungseinrichtung eines Kraftwagens, im Speziellen insbesondere Fahrzeugscheinwerfer des Kraftwagens, bei wenig Tageslicht, beispielsweise einer Lichtstärke von weniger als 1000 Lux, oder auch bei Dunkelheit automatisch eingeschaltet werden. Darüber hinaus ist es aus Energieeffizienzgründen wünschenswert, dass bei starkem Tageslicht, beispielsweise einer Lichtstärke von mehr als 7000 Lux, ein Abblendlicht automatisch ausgeschaltet wird.

Die US 2007/0276551 A1 zeigt ein Verfahren zum Betreiben einer Beleuchtungseinrichtung eines Kraftwagens, bei welchem die Beleuchtungseinrichtung des Kraftwagens mittels einer automatischen Fahrlichtsteuerung des Kraftwagens betrieben wird, wenn die Beleuchtungseinrichtung in einem Automatikmodus versetzt worden ist. Dabei ist es vorgesehen, dass die Beleuchtungseinrichtung wiederum in einen manuellen Modus versetzt wird, sobald die Zündung des Kraftwagens deaktiviert worden ist.

Die DE 10 2012 015 062 A1 zeigt ebenfalls ein Verfahren zum Betreiben einer Beleuchtungseinrichtung eines Kraftwagens. Sobald eine Betätigung eines Tasterelements erfasst worden ist, wird ein Kontext des Kraftwagens erfasst und ein Leuchtzustand der Beleuchtungseinrichtung in Abhängigkeit von der Betätigung des Tasterelements und des erfassten Kontexts des Fahrzeugs eingestellt. Unter dem Kontext des Fahrzeugs sollen dabei diejenigen Umstände zu verstehen sein, in denen sich das Fahrzeug befindet, beispielsweise eine Position des Fahrzeugs, eine Umgebungshelligkeit und/oder Informationen über einen Betriebszustand des Fahrzeugs.

Die DE 10 2004 022 813 A1 zeigt ein Verfahren zum Betreiben eines Kraftfahrzeugscheinwerfers. Beim Vorliegen eines Eingangssignals, welches einen Zustand einer eingeschalteten Zündung anzeigt, eines Eingangssignals, welches einen Stillstand des Fahrzeugs anzeigt, und beim Vorliegend weiterer vorbestimmter Eingangssignale wird das Abblendlicht eingeschaltet. Eine gattungsgemäßes Beleuchtungssystem ist aus WO 2010/076589 bekannt.

Es ist die Aufgabe der vorliegenden Erfindung, einen besonders sicheren, komfortablen und energieeffizienten Betrieb einer Kraftwagenaußenbeleuchtung zu ermöglichen.
Diese Aufgabe wird durch ein Beleuchtungssystem für einen Kraftwagen sowie durch einen Kraftwagen mit einem derartigen Beleuchtungssystem mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.
Das erfindungsgemäße Beleuchtungssystem für einen Kraftwagen umfasst eine Kraftwagenaußenbeleuchtung und eine Bedieneinrichtung, mittels welcher folgende Beleuchtungsmodi der Kraftwagenaußenbeleuchtung einstellbar sind: deaktiviert, Standlicht, Tagfahrlicht, Fahrlicht und Automatikmodus, bei welchem die Kraftwagenaußenbeleuchtung mittels einer automatischen Fahrlichtsteuerung betrieben wird. Das erfindungsgemäße Beleuchtungssystem zeichnet sich dabei dadurch aus, dass die Bedieneinrichtung erfindungsgemäß eine monostabiles Bedienelement auf, mittels welchem die Beleuchtungsmodi deaktiviert, Standlicht, Tagfahrlicht und Fahrlicht einstellbar sind, wobei die Bedieneinrichtung ein weiteres Bedienelement in Form von einer Taste oder einem Kipphebel aufweist, mittels welchem der Automatikmodus einstellbar ist.
Ein monostabiles Bedienelement zeichnet sich dadurch aus, dass von zwei oder mehr möglichen Zuständen nur einer stabil ist, welcher üblicherweise einer Ruhestellung entspricht. Andere Zustände, welche einer Arbeitsstellung entsprechen, werden nur so lange beibehalten, wie eine externe Kraft auf das monostabile Bedienelement einwirkt, die es daran hindert, in seine Ruhestellung zurückzukehren. Beispielsweise kann das monostabile Bedienelement als Taster, Kipphebel oder Drehrad ausgebildet sein.

Durch die erfindungsgemäße Lösung wird dem Problem entgegengewirkt, dass eine mechanisch gerastete Schalterposition gegebenenfalls nicht mit dem aktuellen Beleuchtungsmodus übereinstimmt. Mit anderen Worten wird durch das erfindungsgemäße Beleuchtungssystem der Konflikt zwischen einer gerasteten Schalterposition und einem gerade eingestellten, insbesondere automatisch eingestellten, Beleuchtungsmodus aufgelöst.

Gemäß einer Ausführungsform, die jedoch nicht Bestandteil der Erfindung ist, weist die Bedieneinrichtung ein einziges monostabiles Bedienelement auf, mittels welchem die Beleuchtungsmodi einstellbar sind. Zusätzlich kann es zwei weitere Tasten oder auch Kipphebel geben, um Nebelscheinwerfer und Nebelschlussleuchten zu aktivieren und zu deaktivieren.

Durch das erfindungsgemäße Beleuchtungssystem ergeben sich besonders große designerische Gestaltungsfreiheiten, indem beispielsweise die Bedieneinrichtung in eine Zierleiste eines Kraftwagens integrierbar ist, was beispielsweise bei Drehknebel-Lösungen nicht möglich wäre. Des Weiteren ergibt sich durch das erfindungsgemäße Beleuchtungssystem ein besonders einfaches Bedienkonzept. Des Weiteren ergibt sich eine reduzierte kognitive Komplexität, da ein monostabiles Bedienelement und eine weitere Taste bzw. ein weiterer Kipphebel plus Nebelfunktionen vorhanden sind. Ferner wird die Blindbedienbarkeit durch das erfindungsgemäße Beleuchtungssystem wesentlich verbessert. Darüber hinaus ist es möglich, dass länderspezifische gesetzliche Anforderungen bezüglich des Betriebs des Beleuchtungssystems ganz einfach durch eine entsprechende Softwarecodierung abgedeckt werden können.
In vorteilhafter Ausgestaltung der Erfindung ist es vorgesehen, dass das Beleuchtungssystem dazu ausgebildet ist, den Automatikmodus zu aktivieren, sobald anhand zumindest eines Kriteriums erfasst worden ist, dass ein neues Fahrereignis und/oder ein Fahrerwechsel stattgefunden hat. Mit anderen Worten wird vorzugsweise nach einem Neustart des Kraftwagens immer der Automatikmodus automatisch aktiviert, bei welchem die Kraftwagenaußenbeleuchtung mittels einer automatischen Fahrlichtsteuerung betrieben wird. Sollte der Fahrer den Wunsch haben, von dem aktuellen Automatikmodus abzuweichen, kann er in jeweilige von der Fahrsituation abhängige Funktionen wechseln, während der Fahrt beispielsweise nur das Fahrlicht aktivieren, im Stand zum Beispiel auch die Beleuchtung vollständig deaktivieren. Dadurch, dass vorzugsweise der Automatikmodus immer dann aktiviert wird, sobald anhand zumindest eines Kriteriums erfasst worden ist, dass ein neues Fahrereignis und/oder ein Fahrerwechsel stattgefunden hat, wird ein besonders sicherer Betrieb des Beleuchtungssystems gewährleistet.

In weiterer vorteilhafter Ausgestaltung der Erfindung ist es vorgesehen, dass das Beleuchtungssystem dazu ausgebildet ist, den Automatikmodus zu aktivieren, sobald eine Zündung des Kraftwagens aktiviert worden ist. Vorzugsweise ist das Beleuchtungssystem in diesem Zusammenhang dazu ausgebildet, den Automatikmodus nur dann zu aktivieren, wenn zum Zeitpunkt einer vorherigen Deaktivierung der Zündung des Kraftwagens einer der Beleuchtungsmodi Standlicht, Tagfahrlicht, Fahrlicht oder Automatikmodus aktiviert war. Mit anderen Worten erfolgt keine automatische Aktivierung des Automatikmodus nach Aktivierung der Zündung, wenn ein Fahrer vor dem Abstellen bzw. Deaktivieren des Kraftwagens manuell das Fahrlicht deaktiviert hatte. Dies trägt dazu bei, dass insbesondere im Falle von Xenonscheinwerfern diese nicht unnötig stark belastet werden, indem diese automatisch wieder angeschaltet werden, was sich positiv auf deren Lebensdauer auswirkt. Dies kann beispielsweise von Vorteil sein, wenn ein Fahrer den Kraftwagen in seiner Garage abgestellt hat und währenddessen das Fahrtlicht schon deaktiviert hatte. Sollte der Fahrer oder ein anderer Fahrer erneut in den Kraftwagen einsteigen, so kann es wünschenswert sein, dass auch bei entsprechend niedriger Umgebungshelligkeit das Fahrtlicht nicht direkt automatisch mit Aktivierung der Zündung eingeschaltet wird. Ferner kann es vorgesehen sein, dass beim Abstellen des Kraftwagens das Standlicht aktiviert worden ist. Dieses bleibt auch nach Deaktivierung der Zündung, also bei einem Zustand Klemme 15 aus, eingeschaltet. Sobald der Kraftwagen wieder aktiviert wird, also der Zustand Klemme 15 ein erfolgt, gibt es zwei Möglichkeiten. Entweder bleibt das Standlicht in diesem Falle zunächst einmal weiterhin aktiviert und es wird erst der Automatikmodus aktiviert, wenn der Kraftwagen erstmalig eine vorgegebene Geschwindigkeit, zum Beispiel 10 km/h, überschreitet. Alternativ ist es auch möglich, dass mit Aktivierung des Kraftwagens, also dem Zustand Klemme 15 ein, direkt der Automatikmodus aktiviert wird.

In weiterer vorteilhafter Ausgestaltung der Erfindung ist es vorgesehen, dass das Beleuchtungssystem dazu ausgebildet ist, den Automatikmodus zu aktivieren, sobald der Kraftwagen nach Aktivierung der Zündung erstmals eine vorgegebene Geschwindigkeit, insbesondere 10 km/h, überschreitet. Mit anderen Worten ist es vorgesehen, dass der Automatikmodus erst aktiviert wird, sobald eine als kritisch angesehene bzw. vorgegebene Geschwindigkeit überschritten wird. Dadurch wird ebenfalls ein besonders sicherer Betrieb des Beleuchtungssystems und somit des Kraftwagens ermöglicht.

Eine weitere vorteilhafte Ausführungsform der Erfindung sieht vor, dass das Beleuchtungssystem dazu ausgebildet ist, insbesondere bei noch deaktivierter Zündung des Kraftwagens, anhand einer erfassten Information über einen Öffnen oder Schließen einer Tür des Kraftwagens auf ein neues Fahrereignis und/oder ein Fahrerwechsel zu schließen. Anhand eines entsprechenden Türsignals kann auf einfache und zuverlässige Weise auf ein neues Fahrereignis und/oder einen Fahrerwechsel geschlossen werden, so dass dadurch ebenfalls ein besonders sicherer und zuverlässiger Betrieb des Beleuchtungssystems sichergestellt werden kann. Alternativ oder zusätzlich ist es auch möglich, dass entsprechend im Kraftwagen vorgesehene Sitzbelegungssensoren dazu verwendet werden, um zu erfassen, ob gerade ein Fahrer aus dem Wagen ein- und wieder zugestiegen ist.

In weiterer vorteilhafter Ausgestaltung der Erfindung ist es vorgesehen, dass das Beleuchtungssystem dazu ausgebildet ist, in Abhängigkeit von der Geschwindigkeit des Kraftwagens, der Umgebungshelligkeit und/oder des Motorbetriebs des Kraftwagens die Aktivierung bestimmter Beleuchtungsmodi durch Betätigung der Bedieneinrichtung zu unterbinden. Steigt ein Fahrer beispielsweise in den Kraftwagen ein und der Motor ist noch ausgeschaltet bzw. der Zustand Klemme-15-Aus eingestellt, so kann er durch Betätigung der Bedieneinrichtung lediglich zwischen dem Automatikmodus, einem Standlicht und einer Deaktivierung der Kraftwagenaußenbeleuchtung wählen. Eine Fahrlichtfunktion kann er trotz Betätigung der Bedieneinrichtung gar nicht anwählen. Wird nun die Zündung des Kraftwagens betätigt bzw. der Zustand Klemme-15-Ein eingestellt, so kann der Fahrer durch Betätigung der Bedieneinrichtung grundsätzlich nun auch das Fahrlicht auswählen. Gleiches gilt auch noch bis zu einer Geschwindigkeit von unterhalb von 10 km/h. Sobald der Kraftwagen mit mehr als 10 km/h bewegt wird, so kann der Fahrer manuell durch Betätigung der Bedieneinrichtung lediglich noch zwischen dem sicherem Automatikmodus und dem Fahrlicht wechseln. Je nach Gesetzgebung kann es aber auch vorgesehen sein, dass der Fahrer die Kraftwagenaußenbeleuchtung auch noch deaktivieren kann. In diesem Zusammenhang kann es vorgesehen sein, dass beispielsweise jedoch Begrenzungsleuchten oder ein Standlicht weiterhin aktiviert bleiben.

Eine weitere vorteilhafte Ausführungsform der Erfindung sieht vor, dass das Beleuchtungssystem dazu ausgebildet ist, eine Anzeigeeinrichtung des Kraftwagens derart anzusteuern, dass nur die durch Betätigung der Bedieneinrichtung auswählbaren Beleuchtungsmodi angezeigt werden. Beispielsweise kann es sich bei der Anzeigeeinrichtung um ein Kombiinstrument oder um irgendein anderes Display handeln, welches im Kraftwagen angeordnet ist. Vorzugsweise ist das Beleuchtungssystem auch dazu ausgebildet, den jeweils gerade ausgewählten Beleuchtungsmodus anzuzeigen, beispielsweise ebenfalls in einem Kombiinstrument oder einem anderen Display des Kraftwagens. Beispielsweise kann es auch vorgesehen sein, dass der gerade ausgewählte Beleuchtungsmodus in der Nähe der Bedieneinrichtung angezeigt wird. Dadurch, dass nur die gerade auch tatsächlich manuell anwählbaren Beleuchtungsmodi angezeigt werden, kann der Fahrer des Kraftwagens direkt erkennen, zwischen welchen Beleuchtungsmodi er überhaupt noch manuell wählen kann, falls er den aktivierten Automatikmodus überstimmen möchte.

Gemäß einer weiteren vorteilhaften Ausführungsform der Erfindung ist es vorgesehen, dass das Beleuchtungssystem dazu ausgebildet ist, die Anzeigeeinrichtung derart anzusteuern, dass nur bei einer erfassten Berührung der Bedieneinrichtung die auswählbaren Beleuchtungsmodi angezeigt werden. Dadurch wird insbesondere ein Fahrer des Kraftwagens nicht unnötig durch entsprechende Einblendungen abgelenkt. In diesem Zusammenhang kann es vorzugsweise auch vorgesehen sein, dass die Information bezüglich des manuell veränderbaren Beleuchtungsmodus nur solange angezeigt wird, wie die Bedieneinrichtung berührt wird. Alternativ kann es auch vorgesehen sein, dass nach einer Berührung der Bedieneinrichtung der aktivierbare Beleuchtungsmodus zumindest für eine vorgegebene Dauer - auch bei nicht weiterer Berührung der Bedieneinrichtung - beispielsweise für 5 Sekunden eingeblendet bleibt bevor es wieder ausgeblendet wird. Für den Fall, dass keine Berührungssensorik eingesetzt wird, ist es auch möglich, dass nach einer vorgegebenen Dauer der Nichtbedienung der Bedieneinrichtung ein Antippen oder Drücken der Bedieneinrichtung keinen Moduswechsel hervorruft, sondern nur die auswählbaren Beleuchtungsmodi angezeigt werden.. Wird die Bedieneinrichtung danach innerhalb einer vorgegebenen Zeitfensters erneut angetippt oder gedrückt so wird ein mit der Betätigung korrespondierender Moduswechsel bewirkt.

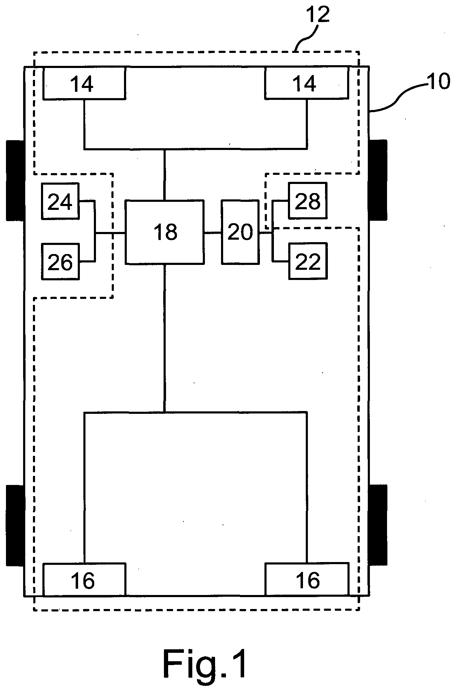

Gemäß einer weiteren vorteilhaften Ausführungsform der Erfindung ist es vorgesehen, dass die Bedieneinrichtung berührungssensitiv und/oder drucksensitiv ausgebildet ist. Falls die Bedieneinrichtung als Taste ausgebildet ist, kann diese beispielsweise mechanisch und/oder sensorisch ausgebildet sein. Beispielsweise kann die Bedieneinrichtung Kraftsensoren oder Berührungssensoren umfassen, mittels welchen die Betätigung der Bedieneinrichtung erfassbar ist. Die Bedieneinrichtung kann auch als eine Art fugenloses Tast- oder Sensorfeld ausgebildet sind. Vorzugsweise weist die Bedieneinrichtung in diesem Zusammenhang auch einen oder mehrere Aktuatoren auf, mittels welchen bei Betätigung der Bedieneinrichtung eine haptische Rückmeldung ausgegeben werden kann.
Der erfindungsgemäße Kraftwagen umfasst das erfindungsgemäße Beleuchtungssystem oder eine vorteilhafte Ausführungsform des erfindungsgemäßen Beleuchtungssystems.
Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung gemäß den beiliegenden Ansprüchen verwendbar, ohne den Rahmen der Erfindung zu verlassen.
Die Zeichnung zeigt in:
- Fig. 1: eine schematische Darstellung eines Kraftwagens mit einem Beleuchtu ngssystem;
- Fig. 2: eine Bedieneinrichtung des Beleuchtungssystems, mittels welcher eine automatische Fahrlichtsteuerung des Beleuchtungssystems aktivierbar und deaktivierbar ist sowie zwei Bedienelemente zum Aktivieren von Nebelscheinwerfern und einer Nebelschlussleuchte;
- Fig. 3: eine schematische Darstellung eines Kombiinstruments des Kraftwagens, wobei auswählbare Beleuchtungsmodi angezeigt werden;
- Fig. 4: eine weitere schematische Darstellung des Kombiinstruments, wobei im Gegensatz zu der in Fig. 3 gezeigten Darstellung zusätzlich noch eine Ausschaltmöglichkeit des Beleuchtungssystems angezeigt wird; und in
- Fig. 5: eine Ausführungsform und Anordnung der Bedieneinrichtung und der Bedienelemente zum Betätigen der Nebelschlussleuchte und der Nebelscheinwerfer, wobei diese Elemente in einer Zierleiste des Kraftwagens integriert sind;
In den Figuren werden gleiche oder funktionsgleiche Elemente mit gleichen Bezugszeichen versehen.
Ein Kraftwagen 10 ist in einer schematischen Darstellung in Fig. 1 gezeigt. Der Kraftwagen 10 umfasst ein mit der gestrichelten Linie gekennzeichnetes Beleuchtungssystem 12. Das Beleuchtungssystem 12 weist eine nicht näher bezeichnete Kraftwagenaußenbeleuchtung auf, welche Scheinwerfer 14 und Rückleuchten 16 umfasst. Des Weiteren umfasst das Beleuchtungssystem 12 eine automatische Fahrlichtsteuerung 18, eine Steuereinrichtung 20 sowie eine Bedieneinrichtung 22.
Mittels der automatischen Fahrlichtsteuerung 18 sind die Fahrzeugscheinwerfer 14 und optional auch noch die Rückleuchten 16 in einem Automatikmodus betreibbar. Mit anderen Worten wird durch die automatische Fahrlichtsteuerung 18 eine Lichtautomatik bereitgestellt, so dass im Automatikmodus die externe Fahrzeugbeleuchtung automatisch in Abhängigkeit von Umgebungsbedingungen und nicht mehr direkt von dem Fahrer gesteuert wird. Die automatische Fahrlichtsteuerung 18 ist dafür mit einem Lichtsensor 24 und mit einem Regensensor 26 gekoppelt, so dass die automatische Fahrlichtsteuerung 18 entsprechende Informationen über die Umgebungsbedingungen des Kraftwagens 10 erhält und die Frontscheinwerfer und die Rückleuchten bedarfsgerecht ansteuern kann.
Das Beleuchtungssystem 12 ist dazu ausgebildet, den Automatikmodus zu aktivieren, sobald anhand zumindest eines Kriteriums erfasst worden ist, dass ein neues Fahrereignis und/oder ein Fahrerwechsel stattgefunden hat. Die Steuereinrichtung 20 kann dazu ausgebildet sein, die Kraftwagenaußenbeleuchtung, also die Frontscheinwerfer 14 und optional auch noch die Rückleuchten 16 in den Automatikmodus zu versetzen, sobald eine Zündung 28 des Kraftwagens 10 aktiviert worden ist. Das Beleuchtungssystem 12 bzw. die Steuereinrichtung 20 kann zusätzlich dazu ausgebildet sein, den Automatikmodus nur dann zu aktivieren, wenn zum Zeitpunkt einer vorherigen Aktivierung der Zündung 28 des Kraftwagens 10 einer der Beleuchtungsmodi Standlicht, Tagfahrlicht, Fahrlicht oder Automatikmodus aktiviert war. Mit anderen Worten wird der Automatikmodus nicht bei Aktivierung der Zündung 28 automatisch aktiviert, wenn beispielsweise ein Fahrer des Kraftwagens 10 beim Abstellen des Kraftwagens 10 die Frontscheinwerfer 14 und die Rückleuchten 16 manuell deaktiviert haben sollte.

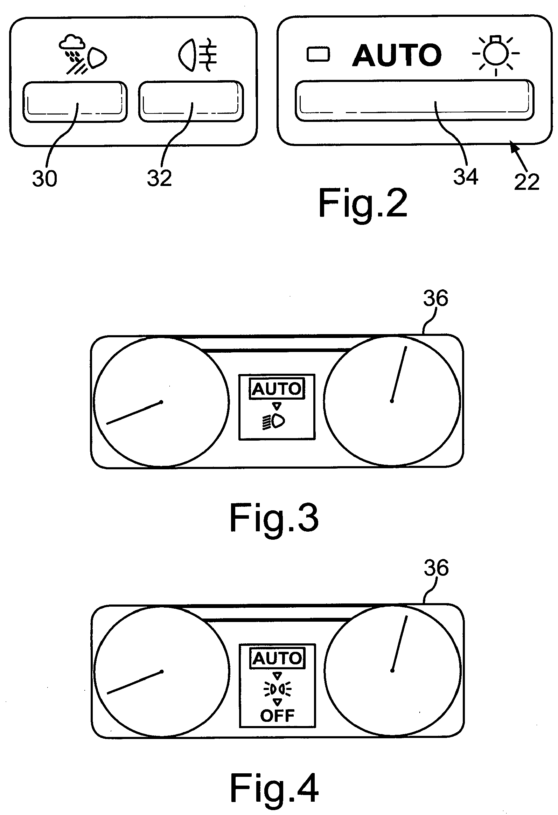

In Fig. 2 ist eine Ausführungsform der Bedieneinrichtung 22 gezeigt, die jedoch nicht Bestandteil der Erfindung ist. Die Bedieneinrichtung 22 ist vorliegend als ein einziger Kipphebel ausgebildet, mittels welchem folgende Beleuchtungsmodi der Kraftwagenaußenbeleuchtung einstellbar sind: deaktiviert, Standlicht, Tagfahrlicht, Fahrlicht und Automatikmodus, bei welchem die Kraftwagenaußenbeleuchtung mittels der automatischen Fahrlichtsteuerung 18 betrieben wird. Die als Kipphebel ausgebildete Bedieneinrichtung 22 ist dabei monostabil ausgebildet. Das heißt, dass der Kipphebel immer wieder selbstständig in eine Ausgangsposition zurückkehrt, sobald der Kipphebel nicht mehr mit einer Kraft - beispielsweise nach oben oder nach unten - beaufschlagt wird. Der Kipphebel kann beispielsweise derart ausgebildet sein, dass dieser ausgehend von der stabilen Ausgangsposition entweder nur in eine oder auch in zwei Richtungen ausgelenkt werden kann. Des Weiteren sind noch zwei weitere Bedienelemente 30, 32 gezeigt, welche vorliegend ebenfalls als Kipphebel ausgebildet sind und dazu dienen, Nebelscheinwerfer und ein Nebelschlussleuchte zu aktivieren bzw. zu deaktivieren. Der Kipphebel 22 kann eine berührungssensitive Oberfläche 34 aufweisen, bei dessen Berührung automatisch die durch Betätigung des Kipphebels 22 auswählbaren Beleuchtungsmodi angezeigt werden.
Alternativ ist es auch möglich, dass die Bedieneinrichtung 22 sowie die beiden weiteren Bedienelemente 30, 32 als mechanische Tasten ausgebildet sind. Die mechanischen Tasten sind in diesem Fall ebenfalls monostabil ausgebildet. Die Tasten kehren also immer wieder selbstständig in eine Ausgangsposition zurück, sobald die Tasten nicht mehr mit einer Kraft beaufschlagt werden.

Ferner ist es auch möglich, dass die Bedieneinrichtung 22 sowie die beiden weiteren Bedienelemente 30, 32 in Form einer aktuatorischen Schalterleiste ausgebildet sind. Die aktuatorische Schalterleiste weist dabei eine fugenlose Optik auf, wobei die Bedieneinrichtung 22 und die weiteren Bedienelemente 30, 32, dazu ausgebildet sind, ein haptisches Feedback zu geben, sobald diese von einem Benutzer betätigt werden. Der Bedieneinrichtung 22 - also in diesem Fall dem betreffenden Tastenfeld in der aktuatorischen Schalterleiste - sind dabei entsprechende Anzeigen zugeordnet, welche als Statusrückmeldung dienen. Mittels der Anzeigen kann der gerade aktivierte Lichtmodus angezeigt werden, also beispielsweise, dass gerade das Standlicht, das Abblendlicht oder der Automatikmodus aktiviert ist. In einer Ausführungsform der Erfindung kann die Bedieneinrichtung 22 in Form eines Drehrads oder Drehrings ausgebildet ist, wobei vorzugsweise innerhalb des Drehrads eine Taste angeordnet ist. Die als Drehrad ausgebildete Bedieneinrichtung 22 ist wiederum monostabil ausgebildet. Das heißt, dass das Drehrad immer wieder selbstständig in eine Ausgangsposition zurückkehrt, sobald das Drehrad nicht mehr mit einer Kraft - beispielsweise entgegen oder mit dem Uhrzeigersinn - beaufschlagt wird. Mittels des Drehrads können die verschiedenen Beleuchtungsmodi ausgewählt werden, indem diesen z.B. entgegen oder mit dem Uhrzeigersinn verdreht wird. Mit anderen Worten kann das Drehrad uni- oder bidirektional verdreht werden. Mittels der mittig innerhalb des Drehrads angeordneten Taste kann der Automatikmodus aktiviert werden. Der Taste ist dabei eine Statusanzeige zugeordnet, welche anzeigt, ob der Automatikmodus gerade aktiviert oder deaktiviert ist. Sobald bei aktiviertem Automatikmodus das Drehrad betätigt wird, wird der Automatikmodus automatisch deaktiviert und ein anderer Beleuchtungsmodus - korrespondierend mit der Betätigung des Drehrads - aktiviert. Eine Pop-up-Anzeige zeigt dabei den gerade aktivierten Beleuchtungsmodus in Form einer Statusinformation an. Das Drehrad kann auch berührungssensitiv ausgebildet sind. Sobald das Drehrad berührt wird, werden jeweils diejenigen Beleuchtungsmodi mittels einer Anzeigeeinrichtung angezeigt, die gerade ausgewählt werden können.
In Fig. 3 ist ein Kombiinstrument 36 des Kraftwagens 10 dargestellt. Vorliegend wird der Kraftwagen 10 mit einer Geschwindigkeit größer 10 km/h fortbewegt. Sobald der Fahrer die Bedieneinrichtung 22 berührt, wird ihm am Kombiinstrument 36 angezeigt, dass er in dem Automatikmodus noch das Fahrlicht manuell anwählen könnte. Weitere Beleuchtungsmodi werden ihm in diesem Fall nicht angeboten. Alternativ - zum Beispiel je nach Gesetzgebung - kann es auch vorgesehen sein, dass der Fahrer durch Betätigung des Kipphebels 22 auch die Scheinwerfer 14 und/oder Rückleuchten 16 deaktivieren kann. Je nach Ausgestaltung der Bedieneinrichtung 22 können die auswählbaren Beleuchtungsmodi vertikal oder horizontal im Kombiinstrument 36 angezeigt werden. Falls die Bedieneinrichtung 22 als Kipphebel ausgebildet ist, erfolgt die Anzeige vorzugsweise vertikal. Falls die Bedieneinrichtung 22 als Taste oder Drehrad ausgebildet ist, erfolgt die Anzeige vorzugsweise horizontal.

In Fig. 4 ist erneut das Kombiinstrument 36 dargestellt. Vorliegend ist der Motor des Kraftwagens 10 noch nicht angelassen, so dass nur die Möglichkeiten Standlicht und Deaktivierung der Fahrzeugaußenbeleuchtung als Auswahlmöglichkeiten neben dem Automatikmodus bereitgestellt werden.

Wie bereits erwähnt, ist das Beleuchtungssystem 12 dazu ausgebildet, den Automatikmodus zu aktivieren, sobald anhand zumindest eines Kriteriums erfasst worden ist, dass ein neues Fahrereignis und/oder ein Fahrerwechsel stattgefunden hat. Ein Kriterium kann dabei sein, ob die Zündung 28 des Kraftwagens 10 gerade aktiviert worden ist. Das Beleuchtungssystem 12 kann auch derart ausgebildet sein, dass dieses den Automatikmodus aktivier, sobald der Kraftwagen 10 nach Aktivierung der Zündung erstmals eine vorgegebene Geschwindigkeit, insbesondere 10 km/h, überschreitet. Ein weiteres Indiz zur Feststellung eines neuen Fahrereignisses oder eines Fahrerwechsels kann auch ein entsprechendes Türsignal sein. Beispielsweise kann das Beleuchtungssystem 12 dazu ausgebildet sein, den Automatikmodus zu aktivieren, sobald bei noch deaktivierter Zündung des Kraftwagens 10 eine Tür des Kraftwagens 10 geöffnet oder geschlossen worden ist. Ferner können auch entsprechende Sitzbelegungssensoren herangezogen werden, um zu erfassen, ob ein Fahrer gerade den Kraftwagen 10 verlassen oder wieder betreten hat.

Das Beleuchtungssystem 12 ist zudem dazu ausgebildet, in Abhängigkeit von der Geschwindigkeit des Kraftwagens und/oder der Umgebungshelligkeit und in Abhängigkeit von einer Deaktivierung oder Aktivierung des Motors die Aktivierung bestimmter Beleuchtungsmodi durch Betätigung der Bedieneinrichtung 22 zu unterbinden. Wie bereits erwähnt, ist das Beleuchtungssystem 12 dazu ausgebildet, eine Anzeigeeinrichtung, gemäß den Ausführungsformen in den Fig. 3 und 4 das Kombiinstrument 36, derart anzusteuern, dass nur die durch Betätigung der Bedieneinrichtung 22 auswählbaren Beleuchtungsmodi angezeigt werden.

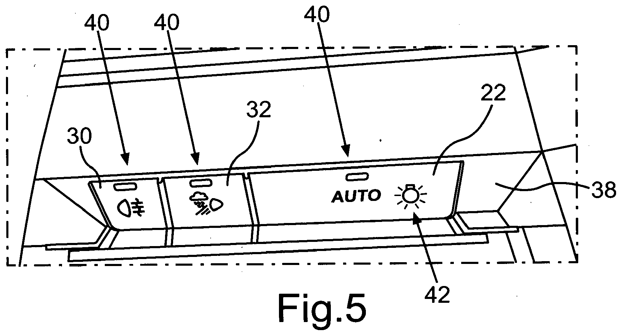

In Fig. 5 ist eine weitere Ausführungsform der Bedieneinrichtung 22 gezeigt, die jedoch nicht Bestandteil der Erfindung ist. Wie zu erkennen, sind die Bedieneinrichtung 22 und die weiteren Bedienelemente 30, 32 im Bereich einer Zierleiste 38 des Kraftwagens integriert. Vorliegend ist die Bedieneinrichtung 22 als eine einzige Taste ausgebildet, mittels welcher die unterschiedlichen Beleuchtungsmodi der Kraftwagenaußenbeleuchtung einstellbar sind. Alternativ könnte die Taste 22 auch oberhalb der Zierleiste 38 angeordnet sein. Die Taste 22 kann dabei beispielsweise als fugenlose Taste mit einer kapazitiven Sensorik ausgebildet sein. Zusätzlich kann die Taste 22 auch eine entsprechende Druckerkennung und eine haptische Rückmeldung aufweisen. In der vorliegenden Ausführungsform können alle Lichtfunktionen außer den Nebelfunktionen mittels der einzigen Taste 22 eingestellt werden. Die Bedienelemente 30, 32 und die Taste 22 weisen jeweils Statusleuchten 40 auf, mittels welchen ein jeweiliger Beleuchtungsmodus signalisiert werden kann. Im vorliegenden Fall wird mittels der Statusleuchte 40 der Taste 22 lediglich nur angezeigt, ob der Automatikmodus eingestellt ist oder nicht. Darüber hinaus weist die Taste 22 eine weitere Anzeige 42 auf, mittels welcher eine Statusrückmeldung angezeigt wird. Sie zeigt an, welcher Beleuchtungsmodus außer bzw. neben dem Automatikmodus gerade aktiviert ist, also ob das Standlicht, das Abblendlicht oder dergleichen aktiviert ist.

## Patentansprüche

1. Beleuchtungssystem (12) für einen Kraftwagen (10), mit einer Kraftwagenaußenbeleuchtung (14, 16) und einer Bedieneinrichtung (22), mittels welcher folgende Beleuchtungsmodi der Kraftwagenaußenbeleuchtung (14, 16) einstellbar sind: deaktiviert, Standlicht, Tagfahrtlicht, Fahrlicht und Automatikmodus, bei welchem die Kraftwagenaußenbeleuchtung (14, 16) mittels einer automatischen Fahrlichtsteuerung betrieben wird,
**dadurch gekennzeichnet, dass**
- die Bedieneinrichtung (22) ein monostabiles Bedienelement aufweist, mittels welchem die Beleuchtungsmodi deaktiviert, Standlicht, Tagfahrtlicht und Fahrlicht einstellbar sind, wobei die Bedieneinrichtung (22) ein weiteres Bedienelement in Form von einer Taste oder einem Kipphebel aufweist, mittels welchem der Automatikmodus einstellbar ist.

2. Beleuchtungssystem (12) nach Anspruch 1,
**dadurch gekennzeichnet, dass**
das Beleuchtungssystem (12) dazu ausgebildet ist, den Automatikmodus zu aktivieren, sobald anhand zumindest eines Kriterium erfasst worden ist, dass ein neues Fahrereignis und/oder ein Fahrerwechsel stattgefunden hat.

3. Beleuchtungssystem (12) nach Anspruch 1 oder 2,
**dadurch gekennzeichnet, dass**
das Beleuchtungssystem (12) dazu ausgebildet ist, den Automatikmodus zu aktivieren, sobald eine Zündung (28) des Kraftwagens (10) aktiviert worden ist.

4. Beleuchtungssystem (12) nach Anspruch 3,
**dadurch gekennzeichnet, dass**
das Beleuchtungssystem (12) dazu ausgebildet ist, den Automatikmodus nur dann zu aktivieren, wenn zum Zeitpunkt einer vorherigen Deaktivierung der Zündung (28) des Kraftwagens (10) einer der Beleuchtungsmodi Standlicht, Tagfahrtlicht, Fahrlicht oder Automatikmodus aktiviert war.

5. Beleuchtungssystem (12) nach einem der vorhergehenden Ansprüche,
**dadurch gekennzeichnet, dass**
das Beleuchtungssystem (12) dazu ausgebildet ist, den Automatikmodus zu aktivieren, sobald der Kraftwagen (10) nach Aktivierung der Zündung (28) erstmals eine vorgegebene Geschwindigkeit, insbesondere 10 km/h, überschreitet.

6. Beleuchtungssystem (12) nach einem der vorhergehenden Ansprüche,
**dadurch gekennzeichnet, dass**
das Beleuchtungssystem (12) dazu ausgebildet ist, , insbesondere bei noch deaktivierter Zündung (28) des Kraftwagens (10), anhand einer erfassten Information über einen Öffnen oder Schließen einer Tür des Kraftwagens (10) auf ein neues Fahrereignis und/oder ein Fahrerwechsel zu schließen.

7. Beleuchtungssystem (12) nach einem der vorhergehenden Ansprüche,
**dadurch gekennzeichnet, dass**
das Beleuchtungssystem (12) dazu ausgebildet ist, in Abhängigkeit von der Geschwindigkeit des Kraftwagens (10), der Umgebungshelligkeit und/oder des Motorbetriebs des Kraftwagens (10) die Aktivierung bestimmter Beleuchtungsmodi durch Betätigung der Bedieneinrichtung (22) zu unterbinden.

8. Beleuchtungssystem (12) nach Anspruch 7,
**dadurch gekennzeichnet, dass**
das Beleuchtungssystem (12) dazu ausgebildet ist, eine Anzeigeeinrichtung (36) des Kraftwagens (10) derart anzusteuern, dass nur die durch Betätigung der Bedieneinrichtung (22) auswählbaren Beleuchtungsmodi angezeigt werden.

9. Beleuchtungssystem (12) nach Anspruch 8,
**dadurch gekennzeichnet, dass**
das Beleuchtungssystem (12) dazu ausgebildet ist, die Anzeigeeinrichtung (36) derart anzusteuern, dass nur bei einer erfassten Berührung der Bedieneinrichtung (22) die auswählbaren Beleuchtungsmodi angezeigt werden.

10. Beleuchtungssystem (12) nach einem der vorhergehenden Ansprüche,
**dadurch gekennzeichnet, dass**
die Bedieneinrichtung (22) berührungssensitiv und/oder drucksensitiv ausgebildet ist.

11. Kraftwagen (10) mit einem Beleuchtungssystem (12) nach einem der vorhergehenden Ansprüche.

## Claims

1. Lighting system (12) for a vehicle (10), with a vehicle exterior lighting (14, 16) and an operating device (22), by means of which following lighting modes of the vehicle exterior lighting (14, 16) can be set: deactivated, parking light, daytime running light, driving light and automatic mode, in which the vehicle exterior lighting (14, 16) is operated by means of an automatic driving light control system, **characterised in that**
- the operating device (22) has a monostable operating element by means of which the lighting modes deactivated, parking light, daytime running light and driving light can be set, wherein the operating device (22) has a further operating element in the form of a button or toggle lever by means of which the automatic mode can be set.

2. Lighting system (12) according to claim 1, **characterised in that** the lighting system (12) is designed to activate the automatic mode as soon as it has been determined on the basis of at least one criterion that a new driving event and/or a driver change has taken place.

3. Lighting system (12) according to claim 1 or 2, **characterised in that** the lighting system (12) is designed to activate the automatic mode as soon as an ignition (28) of the vehicle (10) has been activated.

4. Lighting system (12) according to claim 3, **characterised in that** the lighting system (12) is designed to activate the automatic mode only when at the time of a previous deactivation of the ignition (28) of the vehicle (10) one of the lighting modes parking light, daytime running light, driving light or automatic mode was activated.

5. Lighting system (12) according to one of the preceding claims, **characterised in that** the lighting system (12) is designed to activate the automatic mode as soon as the vehicle (10) after activation of the ignition (28) for the first time exceeds a predetermined speed, in particular 10 km/h.

6. Lighting system (12) according to one of the preceding claims, **characterised in that** the lighting system (12) is designed, in particular in the case of a still deactivated ignition (28) of the vehicle (10), on the basis of a detected item of information about an opening or closing of a door of the vehicle (10) to deduce a new driving event and/or a driver change.

7. Lighting system (12) according to one of the preceding claims, **characterised in that** the lighting system (12) is designed, depending on the speed of the vehicle (10), the ambient brightness and/or the motor operation of the vehicle (10), to prevent the activation of particular lighting modes resulting from actuation of the operating device (22).

8. Lighting system (12) according to claim 7, **characterised in that** the lighting system (12) is designed to control a display device (36) of the vehicle (10) in such a way that only the lighting modes are displayed which can be selected by actuating the operating device (22).

9. Lighting system (12) according to claim 8, **characterised in that** the lighting system (12) is designed to control the display device (36) in such a way that the selectable lighting modes are only displayed when a touch of the operating device (22) is detected.

10. Lighting system (12) according to one of the preceding claims, **characterised in that** the operating device (22) is designed to be touch sensitive and/or pressure sensitive.

11. Vehicle (10) with a lighting system (12) according to one of the preceding claims.

## Revendications

1. Système d'éclairage (12) pour un véhicule à moteur (10), avec un éclairage extérieur de véhicule à moteur (14, 16) et un dispositif de commande (22), au moyen duquel des modes d'éclairage suivants de l'éclairage extérieur de véhicule à moteur (14, 16) peuvent être réglés : désactivé, feux de position, feux de jour, feux de croisement et mode automatique, dans lequel l'éclairage extérieur de véhicule à moteur (14, 16) fonctionne au moyen d'une commande de feux de croisement automatique,
**caractérisé en ce que**
- le dispositif de commande (22) présente un élément de commande monostable, au moyen duquel les modes d'éclairage désactivé, feux de position, feux de jour et feux de croisement peuvent être réglés, dans lequel le dispositif de commande (22) présente un autre élément de commande sous la forme d'un bouton ou d'un levier basculant, au moyen duquel le mode automatique peut être réglé.

2. Système d'éclairage (12) selon la revendication 1,
**caractérisé en ce que**
le système d'éclairage (12) est réalisé pour activer le mode automatique dès qu'il a été détecté, à l'aide d'au moins un critère, qu'un nouvel événement de conduite et/ou un changement de conducteur ont eu lieu.

3. Système d'éclairage (12) selon la revendication 1 ou 2,
**caractérisé en ce que**
le système d'éclairage (12) est réalisé pour activer le mode automatique dès qu'un allumage (28) du véhicule à moteur (10) a été activé.

4. Système d'éclairage (12) selon la revendication 3,
**caractérisé en ce que**
le système d'éclairage (12) est réalisé pour activer le mode automatique seulement quand au moment d'une désactivation antérieure de l'allumage (28) du véhicule à moteur (10), un des modes d'éclairage, feux de position, feux de jour, feux de croisement ou mode automatique, était activé.

5. Système d'éclairage (12) selon l'une quelconque des revendications précédentes,
**caractérisé en ce que**
le système d'éclairage (12) est réalisé pour activer le mode automatique dès que le véhicule à moteur (10) dépasse, après l'activation de l'allumage (28), pour la première fois une vitesse spécifiée, en particulier 10 km/h.

6. Système d'éclairage (12) selon l'une quelconque des revendications précédentes,
**caractérisé en ce que**
le système d'éclairage (12) est réalisé pour déduire un nouvel événement de conduite et/ou un changement de conducteur, en particulier lors d'un allumage (28) encore désactivé du véhicule à moteur (10), à l'aide d'une information détectée concernant une ouverture ou fermeture d'une porte du véhicule à moteur (10).

7. Système d'éclairage (12) selon l'une quelconque des revendications précédentes,
**caractérisé en ce que**
le système d'éclairage (12) est réalisé pour empêcher, en fonction de la vitesse du véhicule à moteur (10), de la clarté de l'environnement et/ou du fonctionnement du moteur du véhicule à moteur (10), l'activation de certains modes d'éclairage par l'actionnement du dispositif de commande (22).

8. Système d'éclairage (12) selon la revendication 7,
**caractérisé en ce que**
le système d'éclairage (12) est réalisé pour piloter un dispositif d'affichage (36) du véhicule à moteur (10) de telle manière que ne sont affichés que les modes d'éclairage pouvant être sélectionnés par l'actionnement du dispositif de commande (22).

9. Système d'éclairage (12) selon la revendication 8,
**caractérisé en ce que**
le système d'éclairage (12) est réalisé pour piloter le dispositif d'affichage (36) de telle manière que sont affichés les modes d'éclairage pouvant être sélectionnés seulement dans le cas d'un contact détecté du dispositif de commande (22).

10. Système d'éclairage (12) selon l'une quelconque des revendications précédentes,
**caractérisé en ce que**
le dispositif de commande (22) est réalisé de manière sensible au contact et/ou de manière sensible à la pression.

11. Véhicule à moteur (10) avec un système d'éclairage (12) selon l'une quelconque des revendications précédentes.
